# EUROPÄISCHE PATENTANMELDUNG

(11) **EP 0 669 292 A1**
(43) Veröffentlichungstag der Anmeldung: **30.08.1995**
(21) Anmeldenummer: 93118073.1
(22) Anmeldetag: 08.11.1993
(51) Int. Cl.: C04B 18/22, C04B 18/04, C08L 95/00, E01C 7/26, E01C 7/14

(54) **Umweltfreundliches Entsorgungsverfahren für Altreifen, Altkunststoff, Schreddergut, Elektronikschrott**

(71) Anmelder: Zok, Christian, D-35745 Herborn (DE)
(72) Erfinder: Zok, Christian, D-35745 Herborn (DE)

(57) **Zusammenfassung**

Verwendung des Schreddergutes aus Altreifen als Füllstoff für alle Arten von Betonfertigelementen, in Artbeton, in Straßenbeläge bituminösen Art oder als Dämmstoffe.

Der größte Vorteil des Verfahrens ist die Vermeidung von Umweltschäden und die Reduzierung kostbaren Deponievolumens.

## Beschreibung

Der Gegenstand dieses Verfahrens ist es, sonst nicht mehr verwertbare Abfallstoffe der o.g. Bereiche einer sinnvollen, umweltschonenden und wirtschaftlichen Verwertung zuzuführen.

Das Verfahren:
Die o.g. Altstoffe fallen in aller Welt in großen Mengen an und werden oft, da problematisch, nicht mehr einer Wiederverwertung zugeführt und stattdessen entweder unter hohen Kosten offiziell entsorgt oder, sehr häufig, illegal irgendwo untergegraben oder im sogenannten "Müllexport", ebenfalls meist in illegaler Praxis, außer Landes gebracht.

In dem von mir angemeldeten Verfahren werden diese Stoffe in einer sinnvollen und umweltgerechten Weise wirtschaftlich verarbeitet.

Die Stoffe werden, auf handelsüblichen oder entsprechend variierten Shredderanlagen ( Mahlanlagen) auf die für den jeweiligen Zweck erforderliche Korngröße gebracht. Gegebenenfalls werden anderweitig verwertbare Inhaltsstoffe ( Metalle o.ä.) mit Hilfe zwischen - oder nachgeschalteter Separiereinrichtungen ausgesondert. Danach wird das Mahlgut in der jeweils notwendigen Menge dem entsprechenden Verarbeitungsmedium beigemischt und anschließend zur Endform des jeweiligen Produktes verarbeitet.

Stoffe, welch in irgendeiner Weise Schadstoffe absondern könnten, werden vorher in geshredderter Form in einem Versiegelungsbad mit anschließender Trocknung versiegelt.

Ebenso kann es notwendig sein, durch dieses Versiegelungsbad, jedoch von anderer Konsistenz, eine bessere Haftvermittlung mit dem Verarbeitungsmedium zu erzielen. Dieser Verfahrensteil ist hiermit ebenfall angemeldet, Einzelheiten ergeben sich aus den zu verarbeitenden Stoffen und werden entsprechend entwickelt und getrennt angemeldet. Die Mischungsverhältnisse werden dem Verwendungszweck entsprechend festgelegt.

Durch das Umhüllen des Shreddergutes mit dem Verarbeitungsmedium (Beton, bituminöse Straßenbeläge, Betonfertigteile aller Art) wird eine Kapselung der Inhaltsstoffe des Shreddergutes zuverlässig erreicht.

Weiterhin entsteht ein deutlicher Spareffekt bei den primären Inhaltsstoffen der genannten Baustoffe und es erfolgt eine saubere umweltverträgliche Entsorgung der vorgenannten Reststoffe. Durch Einsparung kostbaren Deponieraumes sowie der entsprechenden Vermeidung der Deponiekosten erbringt dieses Verfahren einen hohen ökologischen und volkswirtschaftlichen Nutzen.

Außerdem wird durch dieses Verfahren der Kostendruck auf die Industrie im Punkt Entsorgung und damit die Versuchung, zur Kosteneinsparung illegale Praktiken anzuwenden, stark gemindert.

## Patentansprüche

1. Der Anmelder erhebt den Anspruch auf die alleinige kommerzielle Verwertung dieses Verfahrens in folgenden Bereichen:
A) Verwendung des Shreddergutes aus Altreifen als : Füllstoff für alle Arten von Betonfertigelementen tragender oder nichttragender Natur, wie z.B. : Randsteine, Verbundsteine, Blumenkübel, Betonrohre; Ölabscheider, Sickergrubenformteile, Küstenbefestigungselemente, Schachtelemente, Lichtschachtteile, Bauelemente für Fertigkeller und - gebäude, Treppenstufen, Treppenwangen, Böschungswinkel und aller anderen möglichen, hier nicht aufgeführten Teile. Ebenso die Verwendung als Füllstoff in Ortbeton.
B) Verwendung des Shreddergutes aus Altreifen als: Füllstoff für Straßenbeläge bituminöser Art als auch Betonbeläge für Verkehrseinrichtungen aller Art, vorzugsweise im abriebarmen Bereich der jeweiligen Grobschichten.
C) Verwendung des Shreddergutes aus Altreifen als: Dämmstoffe, Isolierstoffe, Füllstoffe, Nivellierschichtmaterial in der Bauwirtschaft in Form von Isolierschüttungen bei zweischaligen Mauerwerk, Nivellierschicht bei unebenen Böden (Bausanierung, schwimmender Estrich) als Geräusch - und Wärmedämmschutzmaßnahme. (Subsituierung von ähnlichen verwendeten Stoffen auf der Basis von Schaumstoffkugeln).
D) Verwendung der anderen genannten Shreddergüter ist generell bei allen unter A) und B) genannten Anwendungen möglich, unter Verwendung der im Verfahren beschriebenen Versiegelungsmaßnahmen.
